# EUROPEAN PATENT SPECIFICATION

(11) **EP 4 513 629 B1**
(45) Date of publication and mention of the grant of the patent: **09.12.2026**
(21) Application number: 23795231.2
(22) Date of filing: 21.04.2023
(51) Int. Cl.: H01M 10/655, H01M 10/6568, H01M 10/6557

(54) **THERMAL MANAGEMENT COMPONENT, BATTERY, AND ELECTRIC DEVICE**
WÄRMEVERWALTUNGSKOMPONENTE, BATTERIE UND ELEKTRISCHE VORRICHTUNG
COMPOSANT DE GESTION THERMIQUE, BATTERIE ET DISPOSITIF ÉLECTRIQUE

(30) Priority: 29.04.2022 CN 202221040676 U
(43) Date of publication of application: 26.02.2025
(60) Divisional application: 26216697.8
(73) Proprietor: Contemporary Amperex Technology (Hong Kong) Limited, Central, Hong Kong (HK)
(72) Inventor: GUO, Haijian, Ningde, Fujian 352100 (CN); HUANG, Xiaoteng, Ningde, Fujian 352100 (CN); HOU, Yuepan, Ningde, Fujian 352100 (CN); SONG, Feiting, Ningde, Fujian 352100 (CN); LI, Xingxing, Ningde, Fujian 352100 (CN); ZHOU, Cong, Ningde, Fujian 352100 (CN)
(74) Representative: Gong, Jinping
(86) International application number: PCT/CN2023/089822
(87) International publication number: WO 2023/207798

(56) References cited:
- EP-A1- 3 780 147
- EP-A1- 3 792 994
- EP-A1- 4 459 748
- EP-A1- 4 510 311
- CN-A- 1 713 412
- CN-A- 1 808 751
- CN-A- 106 960 924
- CN-A- 110 867 542
- CN-A- 112 103 418
- CN-A- 113 410 562
- CN-U- 210 136 906
- CN-U- 210 136 907
- CN-U- 210 136 908
- CN-U- 211 376 748
- CN-U- 216 015 589
- CN-U- 217 788 555
- DE-A1- 102013 011 892
- JP-A- 2012 059 380
- JP-A- 2017 183 071
- US-B2- 7 682 732

## Description

### CROSS-REFERENCE TO RELATED APPLICATIONS

This application claims priority to Chinese Patent Application No. CN202221040676.X, filed on April 29, 2022 and entitled "THERMAL MANAGEMENT COMPONENT, BATTERY, AND ELECTRIC APPARATUS".

### TECHNICAL FIELD

This application relates to a thermal management component, a battery, and an electric apparatus.

### BACKGROUND

Currently, with the rapid development of new energy vehicles, traction batteries have gained increasing attention and recognition. To ensure the safe and stable operation of new energy vehicles, effective thermal management is required for battery modules.

The battery cell in the battery is prone to swelling in shape as the use time increases, which easily reduces the contact area between the battery cell and the thermal management component in the battery, affecting the efficiency of heat conduction between the thermal management component and the battery cell.
EP 3780147 A1 describes a temperature control assembly and a battery pack.
US 7682732 B2 describes a secondary battery module having protrusions on a barrier rib.
EP 3792994 A1 describes a temperature control assembly and a battery pack.

### SUMMARY

This application provides a thermal management component, a battery, and an electric apparatus, so that the thermal management component can be compressed and undergo slight deformation, thereby reducing the impact of swelling of the battery cell on heat conduction between the battery cell and the thermal management component.

According to a first aspect, an embodiments of this application provides a thermal management component including: a first wall; a second wall spaced apart from the first wall, where an accommodating space is present between the first wall and the second wall; and a support member, where the support member is disposed in the accommodating space oblique to an extension direction of the first wall or the second wall. The thermal management component includes a connecting end, where the connecting end is located between the first wall and the second wall and connects the first wall and the second wall, and the thermal management component further includes at least one end portion reinforcing member disposed between the first wall and the second wall and close to the connecting end.

In the foregoing embodiment, the thermal management component includes the first wall and the second wall spaced apart from the first wall, and the accommodating space is present between the first wall and the second wall. The accommodating space can be used to accommodate a heat exchange medium such as a medium that can be used for heat exchange after cooling or a medium that can be used for heat exchange after heating, specifically, for example, water or a cooling liquid, so that when at least one of the first wall and the second wall is in contact with a target member such as a battery cell or a battery module, temperature of the target member is adjusted through heat transfer. With the support member provided in the accommodating space and the support member disposed oblique to the extension direction of the first wall or the second wall, compared to the arrangement manner where the support member is disposed perpendicular to the extension direction of the first wall or the second wall, the support member in this application provides a small supporting force on the first wall and the second wall, making the thermal management component likely to undergo slight deformation when the thermal management component is subjected to an extrusion force in a stacking direction of the first wall and the second wall, thereby meeting the need for the battery pack to be deformable when compressed, for example, during sealing for assembly. In addition, this can also reduce the risk of damage to the thermal management component under large concentrated stress. With at least one end portion reinforcing member disposed between the first wall and the second wall and close to the connecting end connecting the first wall and the second wall, the end portion reinforcing member supports the connecting end between the first wall and the second wall, which enhances local strength of the connecting end, preventing damage to the connecting end under large stress.

In some embodiments, the support member is provided in plurality, the plurality of support members being spaced apart between the first wall and the second wall.

In the foregoing embodiments, with the plurality of support members spaced apart between the first wall and the second wall, the plurality of support members can divide the accommodating space into a plurality of flow channels. Therefore, when the heat exchange medium enters the accommodating space, the heat exchange medium can be distributed into the plurality of flow channels, thereby evenly regulating the temperature of the target member at various portions when the thermal management component is in contact with the target member. In addition, the support members being spaced apart can prevent the thermal management component from being difficult to compress due to high local strength, thereby improving overall reliability of the heat exchange function.

In some embodiments, the first wall is configured to come into contact with a target member for heat conduction; and an included angle between the support member and a direction perpendicular to a plane on which the first wall is located is within a range of 35° to 55°.

In the foregoing embodiments, when the included angle between the support member and the direction perpendicular to the plane on which the first wall is located is less than 35°, the support member provides a large supporting force on the first wall and the second wall, making the thermal management component less likely to be compressed. When the included angle between the support member and the direction perpendicular to the plane on which the first wall is located is greater than 55°, the support member provides a small supporting force on the first wall and the second wall, causing damage to the thermal management component under large concentrated stress, or causing the thermal management component to come into contact with the second wall to block the accommodating space due to large compressive deformation. Therefore, the included angle between the support member and the direction perpendicular to the plane on which the first wall is located being set within the range of 35° to 55° can allow the thermal management component to be easily compressed and undergo slight deformation, and reduce the risk of damage to the thermal management component under large concentrated stress, or avoid the situation where the thermal management component comes into contact with the second wall to block the accommodating space due to large compressive deformation.

In some embodiments, a plurality of support members are disposed in parallel.

In the foregoing embodiments, in other words, the included angles between the plurality of support members and the direction perpendicular to the plane on which the first wall is located are all the same, and each support member provides the same supporting force on the first wall and the second wall, which can reduce the risk of deformation of the thermal management component due to large local force, and also helps improve aesthetic appearance of the product.

In some embodiments, at least two of the support members each form a different included angle with the first wall.

In the foregoing embodiments, different from the arrangement manner where the plurality of support members are disposed in parallel, at least two support members may alternatively be set at different included angles with the plane on which the first wall is located, for example, one support member forms an included angle of 35° with the plane on which the first wall is located, and an adjacent support member forms an included angle of 45° with the plane on which the first wall is located. This can also support the first wall and the second wall, and can allow the thermal management component to undergo slight deformation, with simple structure and principle which are easy to implement.

Specifically, the end portion reinforcing member is provided in two, and the two end portion reinforcing members are configured to support two connecting ends between the first wall and the second wall respectively.

In some embodiments, a gap is provided between the end portion reinforcing member and the connecting end.

In the foregoing embodiments, in other words, the end portion reinforcing member is spaced apart from the connecting end, so that the heat exchange medium can flow through the gap between the end portion reinforcing member and the connecting end, allowing the connecting end to also conduct heat, thereby further improving uniformity of heat conduction of the thermal management component.

In some embodiments, the thermal management component further includes a first reinforcing member, where the first reinforcing member is disposed on a surface of the first wall facing the second wall, and the first reinforcing member is spaced apart from the second wall.

In the foregoing embodiments, with the first reinforcing member disposed on the surface of the first wall facing the second wall and the first reinforcing member spaced apart from the second wall, the first reinforcing member not only can enhance stiffness of the first wall, but also can avoid direct contact between the first wall and the second wall when the thermal management component is compressed and deformed, thereby preventing the situation where the heat exchange medium cannot flow through caused by the accommodating space being blocked.

In some embodiments, the thermal management component further includes a second reinforcing member, where the second reinforcing member is disposed on a surface of the second wall facing the first wall and is spaced apart from the first wall.

In the foregoing embodiments, with the second reinforcing member disposed on the surface of the second wall facing the first wall and the second reinforcing member spaced apart from the first wall, the second reinforcing member not only can enhance stiffness of the second wall, but also can further avoid direct contact between the second wall and the first wall when the thermal management component is compressed and deformed, thereby further preventing the situation where the heat exchange medium cannot flow through caused by the accommodating space being blocked.

In some embodiments, projected in a stacking direction of the first wall and the second wall, the second reinforcing member and the first reinforcing member are staggered.

In the foregoing embodiments, with the first reinforcing member and the second reinforcing member staggered in the stacking direction of the first wall and the second wall, the first reinforcing member and the second reinforcing member can be prevented from abutting against each other when the first wall and the second wall are compressed to move close to each other, thereby avoiding the situation where the thermal management component cannot deformed when compressed due to the fact the first reinforcing member abuts against the second reinforcing member.

In some embodiments, in a stacking direction of the first wall and the second wall, the first reinforcing member and/or the second reinforcing member has a smaller size than the end portion reinforcing member.

In the foregoing embodiments, in other words, the first reinforcing member has a smaller size than the end portion reinforcing member in the stacking direction of the first wall and the second wall, or the second reinforcing member has a smaller size than the end portion reinforcing member in the stacking direction of the first wall and the second wall, or both the first reinforcing member and the second reinforcing member have a smaller size than the end portion reinforcing member in the stacking direction of the first wall and the second wall. Because the end portion reinforcing member supports the first wall and the second wall, and the first reinforcing member and the second reinforcing member prevent indentations for direct contact between the first wall and the second wall due to being compressed and deformed, the first reinforcing member and the second reinforcing member having a smaller size than the end portion reinforcing member in the stacking direction of the first wall and the second wall can prevent damage to the connecting end between the first wall and the second wall under large stress, and also prevent direct contact between the first wall and the second wall when the thermal management component is compressed, thereby avoiding the accommodating space being blocked.

According to a second aspect, an embodiment of this application provides a battery including: a target member; and the thermal management component according to any one of the embodiments of the first aspect, where the thermal management component is in thermally conductive contact with the target member through the first wall.

In the foregoing embodiment, the target member may be a component such as a battery cell group. The battery provided in the embodiments of the second aspect includes the thermal management component according to any one of the embodiments of the first aspect, and therefore has the technical effects of any one of the foregoing embodiments, which are not described herein again.

In some embodiments, the battery further includes a fluid collecting component, where the fluid collecting component is connected to the thermal management component, the fluid collecting component includes a fluid collecting flow channel, and the fluid collecting flow channel communicates with the accommodating space of the thermal management component.

In the foregoing embodiments, the fluid collecting flow channel of the fluid collecting component communicating with the accommodating space of the thermal management component can allow the heat exchange medium to enter the accommodating space via the fluid collecting component, so as to adjust temperature of the target member. In addition, the heat exchange medium in the accommodating space can return to the fluid collecting component after heat exchange, thereby implementing cyclic heat conduction.

According to a third aspect, an embodiment of this application provides an electric apparatus including the battery according to the embodiments of the second aspect, where the battery is configured to supply power to the electric apparatus.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments of this application. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a schematic structural exploded view of a battery according to some embodiments of this application;
FIG. 3 is a partial schematic structural diagram of a battery according to some embodiments of this application;
FIG. 4 is a schematic structural cross-sectional view of a thermal management component according to some embodiments of this application; and
FIG. 5 is a schematic structural cross-sectional view of another thermal management component according to some embodiments of this application.

The accompanying drawings are not drawn to scale.

Reference signs: vehicle 1000; battery 100, controller 200, motor 300; box 10, first portion 11, second portion 12; battery cell 20, thermal management component 30, target member 40; first wall 301, second wall 302, accommodating space 303, support member 304, end portion reinforcing member 305, connecting end 306, first reinforcing member 307, and second reinforcing member 308.

### DESCRIPTION OF EMBODIMENTS

The following describes in detail embodiments of technical solutions of this application with reference to the accompanying drawings. The following embodiments are merely used to describe the technical solutions in this application more clearly, and therefore are merely used as examples and do not constitute any limitation on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims, and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of this application, "a plurality of" means more than two, unless otherwise specifically defined.

In this specification, reference to "embodiment" means that specific features, structures, or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the apparatuses or elements mentioned must have specific orientations or must be constructed or manipulated according to specific orientations, and therefore shall not be construed as any limitations on the embodiments of this application.

In the description of the embodiments of this application, unless otherwise specified and defined explicitly, the technical terms "mounting", "connection", "join", and "fixing" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

Traction batteries exhibit different electrical cycling performance at different ambient temperatures. An excessively high or low ambient temperature leads to deteriorated cycling performance of traction batteries and even shortens their service life. To ensure safe and excellent operation of new energy vehicles with stable performance, effective thermal management is essential for battery modules, which controls the battery modules to always operate within an appropriate temperature range.

The inventors have found that as use time of a battery increases, a battery cell in the battery is prone to swelling in shape due to internal gas generation, which reduces a heat conduction area between the battery cell or a module formed by a plurality of battery cells and a thermal management component, lowering heat exchange efficiency and resulting in poor effect.

Based on the foregoing considerations, the inventors, through in-depth research, have designed a thermal management component. A support member is provided between a first wall and a second wall of the thermal management component, and the support member is disposed in an accommodating space oblique to an extension direction of the first wall and the second wall. This can appropriately weaken a supporting force of the support member on the first wall and the second wall, so that the thermal management component can be accordingly compressed and undergo slight deformation when the battery cell or battery module swells in shape, thereby mitigating the reduction in the heat exchange area therebetween.

The thermal management component and battery provided in the embodiments of this application can be used in various electric apparatuses to solve the foregoing problems. The electric apparatus may be but is not limited to a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

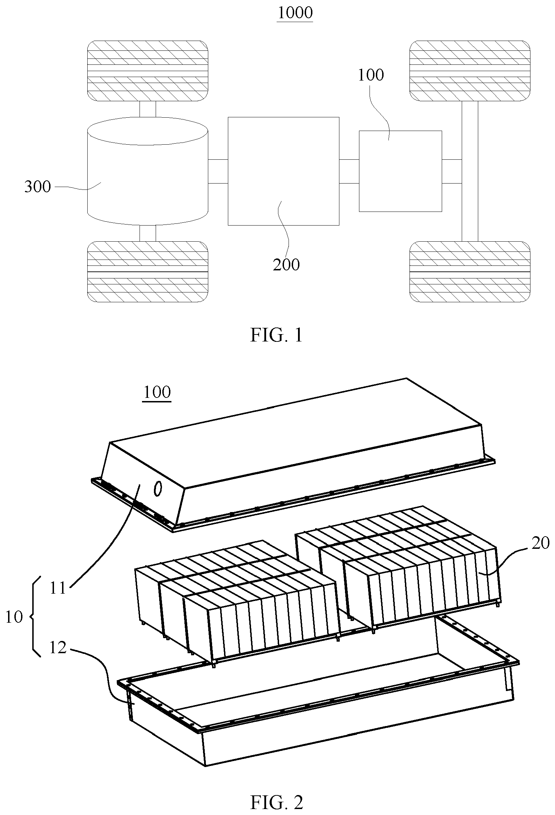

Referring to FIG. 1, FIG. 1 is a schematic structural diagram of a vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, where the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic structural exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together to jointly define an accommodating space for accommodating the battery cell 20. The second portion 12 may be a hollow structure with an opening at one end, the first portion 11 may be a plate-shaped structure, and the first portion 11 covers the opening side of the second portion 12 so that the first portion 11 and the second portion 12 jointly define the accommodating space. Alternatively, both the first portion 11 and the second portion 12 may be hollow structures with an opening at one side, and the opening side of the first portion 11 is engaged with the opening side of the second portion 12. Certainly, the box 10 formed by the first portion 11 and the second portion 12 may be of various shapes, for example, cylinder or cuboid.

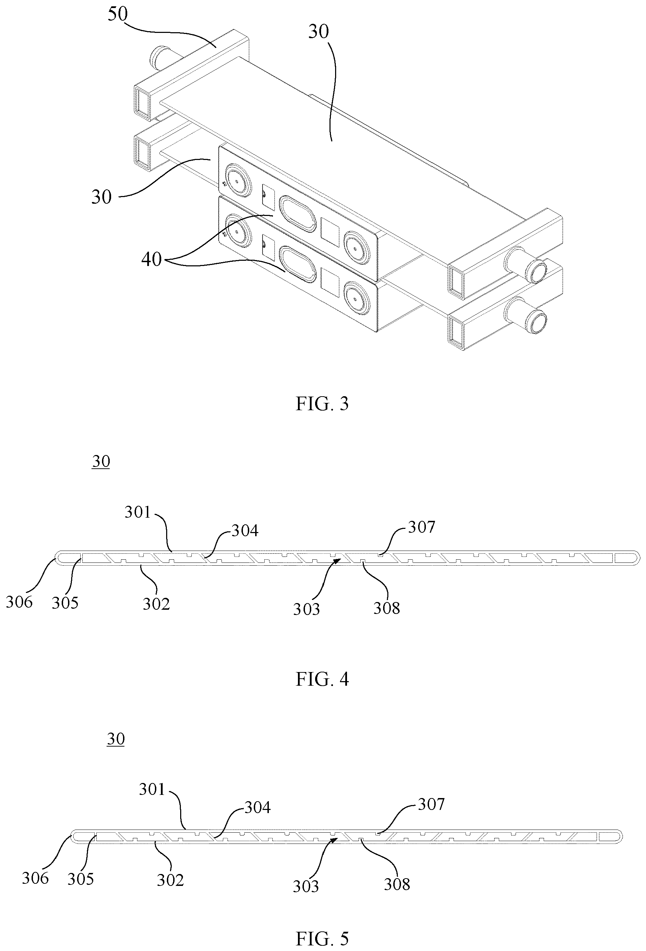

In the battery 100, the battery cell 20 is present in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 being connected in series, parallel, or series-parallel first to form a battery module and then a plurality of battery modules being connected in series, parallel, or series-parallel to form an entirety which is accommodated in the box 10. The battery 100 may further include an electrical connecting member configured to implement electrical connection between the plurality of battery cells 20. The battery cell 20 is a smallest element constituting the battery 100. As shown in FIG. 3, the battery cell 20 includes an electrical connecting member, where the electrical connecting member is configured to electrically connect two adjacent battery cells 20.

Each battery cell 20 may be a secondary battery cell or a primary battery cell, and may be a lithium-sulfur battery cell, a sodium-ion battery cell, or a magnesium-ion battery cell, without being limited thereto. The battery cell 20 may be cylindrical, flat, cuboid, or of other shapes.

Referring to FIG. 3, FIG. 3 is a partial schematic structural diagram of a battery according to some embodiments of this application. According to some embodiments of this application, the battery 100 provided in these embodiments of this application includes a target member and a thermal management component 30. A first wall of the thermal management component 30 is configured to come into contact with the target member and perform heat exchange with the target member. The target member may be a component such as a battery cell or a battery module.

Referring to FIG. 3, according to some embodiments of this application, the battery 100 further includes a fluid collecting component, where the fluid collecting component is connected to the thermal management component 30, the fluid collecting component includes a fluid collecting flow channel, and the fluid collecting flow channel communicates with an accommodating space 303 of the thermal management component 30. The fluid collecting flow channel of the fluid collecting component communicating with the accommodating space 303 of the thermal management component 30 can allow a heat exchange medium to enter the accommodating space 303 via the fluid collecting component, so as to adjust temperature of the target member. In addition, the heat exchange medium in the accommodating space 303 can return to the fluid collecting component after heat exchange, thereby implementing cyclic heat exchange.

Referring to FIG. 3 and FIG. 4, FIG. 4 is a schematic structural cross-sectional view of a thermal management component 30 according to some embodiments of this application. As shown in FIG. 4, the thermal management component 30 provided in some embodiments of this application includes: a first wall; a second wall spaced apart from the first wall, where an accommodating space 303 is present between the first wall and the second wall; and a support member 304, where the support member 304 is disposed in the accommodating space 303 oblique to an extension direction of the first wall or the second wall.

The first wall and the second wall are heat conducting members configured for heat exchange with the target member.

The accommodating space 303 communicates two ends of the thermal management component 30 for circulation of the heat exchange medium such as water, so that when at least one of the first wall and the second wall is in contact with the target member such as the battery module, the temperature of the target member is adjusted through heat transfer.

For example, the support member 304 may be a support plate, a support rib, or the like. The support member 304 is not limited to a specific shape, for example, a cross-sectional shape of the support member 304 may be straight or bent.

With at least one support member 304 provided in the accommodating space 303 and at least one support member 304 disposed oblique to the extension direction of the first wall or the second wall, compared to the arrangement manner where the support member 304 is disposed perpendicular to the extension direction of the first wall or the second wall, the support member 304 in this application provides a small supporting force on the first wall and the second wall, making the thermal management component 30 likely to undergo slight deformation when the thermal management component 30 is subjected to an extrusion force in a stacking direction of the first wall and the second wall, thereby meeting the need for the battery pack to be deformable when compressed, for example, during sealing for assembly. In addition, this can also reduce the risk of damage to the thermal management component 30 under large concentrated stress.

According to some embodiments of this application, the support member 304 is provided in plurality, the plurality of support members 304 being spaced apart between the first wall and the second wall.

With the plurality of support members 304 spaced apart between the first wall and the second wall, the plurality of support members 304 can divide the accommodating space 303 into a plurality of flow channels while supporting strength of the thermal management component 30 is enhanced. Therefore, when the heat exchange medium enters the accommodating space 303, the heat exchange medium can be distributed into the plurality of flow channels, thereby evenly regulating the temperature of the target member at various portions when the thermal management component 30 is in contact with the target member.

According to some embodiments of this application, the first wall is configured to come into contact with a target member for heat conduction; and an included angle between the support member 304 and a direction perpendicular to a plane on which the first wall is located is within a range of 35° to 55°.

When the included angle between the support member 304 and the direction perpendicular to the plane on which the first wall is located is less than 35°, the support member 304 provides a large supporting force on the first wall and the second wall, making the thermal management component 30 less likely to be compressed. When the included angle between the support member 304 and the direction perpendicular to the plane on which the first wall is located is greater than 55°, the support member 304 provides a small supporting force on the first wall and the second wall, causing damage to the thermal management component 30 under large concentrated stress, or causing the thermal management component 30 to come into contact with the second wall to block the accommodating space 303 due to large compressive deformation. Therefore, the included angle between the support member 304 and the direction perpendicular to the plane on which the first wall is located being set within the range of 35° to 55° can allow the thermal management component 30 to be easily compressed and undergo slight deformation, and reduce the risk of damage to the thermal management component 30 under large concentrated stress, or avoid the situation where the thermal management component 30 comes into contact with the second wall to block the accommodating space 303 due to large compressive deformation.

Referring to FIG. 4, according to some embodiments of this application, a plurality of support members 304 are disposed in parallel.

In other words, the included angles between the plurality of support members 304 and the direction perpendicular to the plane on which the first wall is located are all the same, and each support member 304 provides the same supporting force on the first wall and the second wall, which can reduce the risk of deformation of the thermal management component 30 due to large local force, and also helps improve aesthetic appearance of the product.

Referring to FIG. 5, FIG. 5 is a schematic structural cross-sectional view of another thermal management component 30 according to some embodiments of this application. According to some embodiments of this application, at least two support members 304 form different included angles with the first wall.

Different from the arrangement manner where the plurality of support members 304 are disposed in parallel, at least two support members 304 may alternatively be set at different included angles with the plane on which the first wall is located, for example, one support member 304 forms an included angle of 35° with the plane on which the first wall is located, and an adjacent support member 304 forms an included angle of 45° with the plane on which the first wall is located. This can also support the first wall and the second wall, and can allow the thermal management component 30 to undergo slight deformation, with simple structure and principle which are easy to implement.

Referring to FIG. 4 and FIG. 5, according to some embodiments of this application, the thermal management component 30 includes a connecting end 306, where the connecting end 306 is located between the first wall and the second wall and connects the first wall and the second wall, and the thermal management component 30 further includes at least one end portion reinforcing member 305 disposed between the first wall and the second wall and close to the connecting end 306.

For example, the connecting end 306 is a curved structure. Certainly, the connecting end 306 may alternatively be a straight edge for connecting the first wall and the second wall.

For example, the end portion reinforcing member 305 may be a reinforcing plate, a reinforcing rib, or the like.

For example, the end portion reinforcing member 305 is provided in two, and the two end portion reinforcing members 305 are configured to support two connecting ends 306 between the first wall and the second wall respectively.

With at least one end portion reinforcing member 305 disposed between the first wall and the second wall and close to the connecting end 306 connecting the first wall and the second wall, the end portion reinforcing member 305 supports the connecting end 306 between the first wall and the second wall, which enhances local strength of the connecting end 306, preventing damage to the connecting end 306 under large stress.

Referring to FIG. 4 and FIG. 5, according to some embodiments of this application, a gap is provided between the end portion reinforcing member 305 and the connecting end 306.

In other words, the end portion reinforcing member 305 is spaced apart from the connecting end 306, so that the heat exchange medium can flow through the gap between the end portion reinforcing member 305 and the connecting end 306, allowing the connecting end 306 to also conduct heat, thereby further improving uniformity of heat conduction of the thermal management component 30.

Referring to FIG. 4 and FIG. 5, according to some embodiments of this application, the thermal management component 30 further includes a first reinforcing member 307, where the first reinforcing member 307 is disposed on a surface of the first wall facing the second wall, and the first reinforcing member 307 is spaced apart from the second wall.

For example, the first reinforcing member 307 may be a reinforcing plate, a reinforcing rib, or the like.

With the first reinforcing member 307 disposed on the surface of the first wall facing the second wall and the first reinforcing member 307 spaced apart from the second wall, the first reinforcing member 307 not only can enhance stiffness of the first wall, but also can avoid direct contact between the first wall and the second wall when the thermal management component 30 is compressed and deformed, thereby preventing the situation where the heat exchange medium cannot flow through caused by the accommodating space 303 being blocked.

Referring to FIG. 4 and FIG. 5, according to some embodiments of this application, the thermal management component 30 further includes a second reinforcing member 308, where the second reinforcing member 308 is disposed on a surface of the second wall facing the first wall and is spaced apart from the first wall.

For example, the second reinforcing member 308 may also be a reinforcing plate, a reinforcing rib, or the like. The second reinforcing member 308 and the first reinforcing member 307 may have the same or different sizes.

With the second reinforcing member 308 disposed on the surface of the second wall facing the first wall and the second reinforcing member 308 spaced apart from the first wall, the second reinforcing member 308 not only can enhance stiffness of the second wall, but also can further avoid direct contact between the second wall and the first wall when the thermal management component 30 is compressed and deformed, thereby further preventing the situation where the heat exchange medium cannot flow through caused by the accommodating space 303 being blocked.

Referring to FIG. 4 and FIG. 5, according to some embodiments of this application, projected in a stacking direction of the first wall and the second wall, the second reinforcing member 308 and the first reinforcing member 307 are staggered.

With the first reinforcing member 307 and the second reinforcing member 308 staggered in the stacking direction of the first wall and the second wall, the first reinforcing member 307 and the second reinforcing member 308 can be prevented from abutting against each other when the first wall and the second wall are compressed to move close to each other, thereby avoiding the situation where the thermal management component 30 cannot deform when compressed to due to the fact that the first reinforcing member 307 abuts against the second reinforcing member 308.

Referring to FIG. 4 and FIG. 5, according to some embodiments of this application, in a stacking direction of the first wall and the second wall, the first reinforcing member 307 and/or the second reinforcing member 308 has a smaller size than the end portion reinforcing member 305.

In other words, the first reinforcing member 307 has a smaller size than the end portion reinforcing member 305 in the stacking direction of the first wall and the second wall, or the second reinforcing member 308 has a smaller size than the end portion reinforcing member 305 in the stacking direction of the first wall and the second wall, or both the first reinforcing member 307 and the second reinforcing member 308 have a smaller size than the end portion reinforcing member 305 in the stacking direction of the first wall and the second wall. Because the end portion reinforcing member 305 supports the first wall and the second wall, and the first reinforcing member 307 and the second reinforcing member 308 prevent indentations for direct contact between the first wall and the second wall due to being compressed and deformed, the first reinforcing member 307 and the second reinforcing member 308 having a smaller size than the end portion reinforcing member 305 in the stacking direction of the first wall and the second wall can prevent damage to the connecting end 306 between the first wall and the second wall under large stress, and also prevent direct contact between the first wall and the second wall when the thermal management component 30 is compressed, thereby avoiding the accommodating space 303 being blocked.

Referring to FIG. 3 to FIG. 5, according to some embodiments of this application, the embodiments of this application provide a thermal management component 30 including a first wall and a second wall connected to the first wall. An accommodating space 303 is defined between the first wall and the second wall, and at least one support member 304 is disposed between the first wall and the second wall. The at least one support member 304 is disposed in the accommodating space 303 oblique to an extension direction of the first wall and the second wall. In addition, an end portion reinforcing member 305 that is spaced apart from a connecting end 306 is provided close to the connecting end 306 between the first wall and the second wall. At least one first reinforcing member 307 is provided on a surface of the first wall facing the second wall, and the first reinforcing member 307 is spaced apart from the second wall. A second reinforcing member 308 is provided on a surface of the second wall facing the first wall, and the second reinforcing member 308 is spaced apart from the first wall. The at least one support member 304 is disposed oblique to the extension direction of the first wall and the second wall, so the supporting force on the first wall and the second wall is appropriately weakened, allowing the thermal management component 30 to be compressed and undergo slight deformation, thereby meeting the use scenarios where the thermal management component 30 is required to be compressible.

## Claims

1. A thermal management component (30), comprising:
a first wall (301);
a second wall (302) spaced apart from the first wall (301), wherein an accommodating space (303) is present between the first wall (301) and the second wall (302); and
a support member (304), wherein the support member (304) is disposed in the accommodating space (303) oblique to an extension direction of the first wall (301) or the second wall (302);
the thermal management component (30) comprises a connecting end (306), wherein the connecting end (306) is located between the first wall (301) and the second wall (302) and connects the first wall (301) and the second wall (302), and **characterized in that** the thermal management component (30) further comprises at least one end portion reinforcing member (305) disposed between the first wall (301) and the second wall (302) and close to the connecting end (306).

2. The thermal management component (30) according to claim 1, wherein the support member (304) is provided in plurality, the plurality of support members (304) being spaced apart between the first wall (301) and the second wall (302).

3. The thermal management component (30) according to claim 1 or 2, wherein the first wall (301) is configured to come into contact with a target member (40) for heat conduction; and
an included angle between the support member (304) and a direction perpendicular to a plane on which the first wall (301) is located is within a range of 35° to 55°.

4. The thermal management component (30) according to any one of claims 1 to 3, wherein a plurality of support members (304) are disposed in parallel.

5. The thermal management component (30) according to any one of claims 1 to 3, wherein at least two of the support members (304) each form a different included angle with the first wall (301).

6. The thermal management component (30) according to any one of claims 1 to 5, wherein a gap is provided between the end portion reinforcing member (305) and the connecting end (306).

7. The thermal management component (30) according to any one of claims 1 to 5, wherein the thermal management component (30) further comprises a first reinforcing member (307), wherein the first reinforcing member (307) is disposed on a surface of the first wall (301) facing the second wall (302), and the first reinforcing member (307) is spaced apart from the second wall (302).

8. The thermal management component (30) according to claim 7, further comprising a second reinforcing member (308), wherein the second reinforcing member (308) is disposed on a surface of the second wall (302) facing the first wall (301) and is spaced apart from the first wall (301).

9. The thermal management component (30) according to claim 8, wherein projected in a stacking direction of the first wall (301) and the second wall (302), the second reinforcing member (308) and the first reinforcing member (307) are staggered.

10. The thermal management component (30) according to claim 8, wherein in a stacking direction of the first wall (301) and the second wall (302), the first reinforcing member (307) and/or the second reinforcing member (308) has a smaller size than the end portion reinforcing member (305).

11. A battery (100), comprising:
a target member (40); and
the thermal management component (30) according to any one of claims 1 to 10, wherein the thermal management component (30) is in thermally conductive contact with the target member (40) through the first wall (301).

12. The battery (100) according to claim 11, wherein the battery (100) further comprises a fluid collecting component, wherein the fluid collecting component is connected to the thermal management component (30), the fluid collecting component comprises a fluid collecting flow channel, and the fluid collecting flow channel communicates with the accommodating space (303) of the thermal management component (30).

13. An electric apparatus, comprising the battery (100) according to claim 11 or 12, wherein the battery (100) is configured to supply power to the electric apparatus.

## Patentansprüche

1. Wärmemanagementkomponente (30), umfassend:
eine erste Wand (301);
eine zweite Wand (302), die von der ersten Wand (301) beabstandet ist, wobei ein Unterbringungsraum (303) zwischen der ersten Wand (301) und der zweiten Wand (302) vorhanden ist; und
ein Stützelement (304), wobei das Stützelement (304) in dem Unterbringungsraum (303) schräg zu einer Ausdehnungsrichtung der ersten Wand (301) oder der zweiten Wand (302) angeordnet ist;
wobei die Wärmemanagementkomponente (30) ein Verbindungsende (306) umfasst, wobei sich das Verbindungsende (306) zwischen der ersten Wand (301) und der zweiten Wand (302) befindet und die erste Wand (301) und die zweite Wand (302) verbindet, und **dadurch gekennzeichnet, dass** die Wärmemanagementkomponente (30) ferner mindestens ein Endabschnittsverstärkungselement (305) umfasst, das zwischen der ersten Wand (301) und der zweiten Wand (302) und nahe dem Verbindungsende (306) angeordnet ist.

2. Wärmemanagementkomponente (30) nach Anspruch 1, wobei das Stützelement (304) in einer Vielzahl bereitgestellt wird, wobei die Vielzahl von Stützelementen (304) zwischen der ersten Wand (301) und der zweiten Wand (302) voneinander beabstandet sind.

3. Wärmemanagementkomponente (30) nach Anspruch 1 oder 2, wobei die erste Wand (301) konfiguriert ist, um für eine Wärmeleitung mit einem Zielelement (40) in Kontakt zu kommen; und
wobei ein eingeschlossener Winkel zwischen dem Stützelement (304) und einer Richtung senkrecht zu einer Ebene, auf der sich die erste Wand (301) befindet, innerhalb eines Bereichs von 35° bis 55° liegt.

4. Wärmemanagementkomponente (30) nach einem der Ansprüche 1 bis 3, wobei eine Vielzahl von Stützelementen (304) parallel angeordnet sind.

5. Wärmemanagementkomponente (30) nach einem der Ansprüche 1 bis 3, wobei mindestens zwei der Stützelemente (304) jeweils einen anderen eingeschlossenen Winkel mit der ersten Wand (301) bilden.

6. Wärmemanagementkomponente (30) nach einem der Ansprüche 1 bis 5, wobei zwischen dem Endabschnittsverstärkungselement (305) und dem Verbindungsende (306) ein Spalt bereitgestellt wird.

7. Wärmemanagementkomponente (30) nach einem der Ansprüche 1 bis 5, wobei die Wärmemanagementkomponente (30) ferner ein erstes Verstärkungselement (307) umfasst, wobei das erste Verstärkungselement (307) auf einer Oberfläche der ersten Wand (301) angeordnet ist, die der zweiten Wand (302) zugewandt ist, und wobei das erste Verstärkungselement (307) von der zweiten Wand (302) beabstandet ist.

8. Wärmemanagementkomponente (30) nach Anspruch 7, die ferner ein zweites Verstärkungselement (308) umfasst, wobei das zweite Verstärkungselement (308) auf einer Oberfläche der zweiten Wand (302) angeordnet ist, die der ersten Wand (301) zugewandt ist und von der ersten Wand (301) beabstandet ist.

9. Wärmemanagementkomponente (30) nach Anspruch 8, wobei das zweite Verstärkungselement (308) und das erste Verstärkungselement (307) projiziert in einer Stapelrichtung der ersten Wand (301) und der zweiten Wand (302) versetzt zueinander angeordnet sind.

10. Wärmemanagementkomponente (30) nach Anspruch 8, wobei das erste Verstärkungselement (307) und/oder das zweite Verstärkungselement (308) in einer Stapelrichtung der ersten Wand (301) und der zweiten Wand (302) eine geringere Größe aufweisen als das Endabschnittsverstärkungselement (305).

11. Batterie (100), umfassend:
ein Zielelement (40); und
die Wärmemanagementkomponente (30) nach einem der Ansprüche 1 bis 10, wobei die Wärmemanagementkomponente (30) durch die erste Wand (301) in einem wärmeleitfähigen Kontakt mit dem Zielelement (40) steht.

12. Batterie (100) nach Anspruch 11, wobei die Batterie (100) ferner eine Fluidsammelkomponente umfasst, wobei die Fluidsammelkomponente mit der Wärmemanagementkomponente (30) verbunden ist, wobei die Fluidsammelkomponente einen Fluidsammelströmungskanal umfasst und wobei der Fluidsammelströmungskanal mit dem Unterbringungsraum (303) der Wärmemanagementkomponente (30) kommuniziert.

13. Elektrische Vorrichtung, welche die Batterie (100) nach Anspruch 11 oder 12 umfasst, wobei die Batterie (100) konfiguriert ist, um die elektrische Vorrichtung mit Energie zu versorgen.

## Revendications

1. Composant de gestion thermique (30), comprenant :
une première paroi (301) ;
une seconde paroi (302) espacée de la première paroi (301), dans lequel un espace de logement (303) est présent entre la première paroi (301) et la seconde paroi (302) ; et
un élément de support (304), dans lequel l'élément de support (304) est disposé dans l'espace de logement (303) oblique à une direction d'extension de la première paroi (301) ou de la seconde paroi (302) ;
le composant de gestion thermique (30) comprend une extrémité de raccordement (306), dans lequel l'extrémité de raccordement (306) est située entre la première paroi (301) et la seconde paroi (302) et raccorde la première paroi (301) et la seconde paroi (302), et **caractérisé en ce que** le composant de gestion thermique (30) comprend en outre au moins un élément de renfort de partie d'extrémité (305) disposé entre la première paroi (301) et la seconde paroi (302) et près de l'extrémité de raccordement (306).

2. Composant de gestion thermique (30) selon la revendication 1, dans lequel l'élément de support (304) est prévu en pluralité, la pluralité d'éléments de support (304) étant espacés les uns des autres entre la première paroi (301) et la seconde paroi (302).

3. Composant de gestion thermique (30) selon la revendication 1 ou 2, dans lequel la première paroi (301) est configurée pour entrer en contact avec un élément (40) pour conduction de chaleur ; et
un angle inclus entre l'élément de support (304) et une direction perpendiculaire à un plan sur lequel la première paroi (301) est située est dans les limites d'une plage de 35° à 55°.

4. Composant de gestion thermique (30) selon l'une quelconque des revendications précédentes 1 à 3, dans lequel une pluralité d'éléments de support (304) sont disposés en parallèle.

5. Composant de gestion thermique (30) selon l'une quelconque des revendications précédentes 1 à 3, dans lequel au moins deux des éléments de support (304) forment chacun un angle inclus différent avec la première paroi (301).

6. Composant de gestion thermique (30) selon l'une quelconque des revendications précédentes 1 à 5, dans lequel un écart est prévu entre l'élément de renfort de partie d'extrémité (305) et l'extrémité de raccordement (306).

7. Composant de gestion thermique (30) selon l'une quelconque des revendications précédentes 1 à 5, dans lequel le composant de gestion thermique (30) comprend en outre un premier élément de renforcement (307), dans lequel le premier élément de renforcement (307) est disposé sur une surface de la première paroi (301) faisant face à la seconde paroi (302), et le premier élément de renforcement (307) est espacé de la seconde paroi (302).

8. Composant de gestion thermique (30) selon la revendication 7, comprenant en outre un second élément de renforcement (308), dans lequel le second élément de renforcement (308) est disposé sur une surface de la seconde paroi (302) faisant face à la première paroi (301) et est espacé de la première paroi (301).

9. Composant de gestion thermique (30) selon la revendication 8, dans lequel projetés dans une direction d'empilage de la première paroi (301) et de la seconde paroi (302), le second élément de renforcement (308) et le premier élément de renforcement (307) sont décalés.

10. Composant de gestion thermique (30) selon la revendication 8, dans lequel, dans une direction d'empilage de la première paroi (301) et de la seconde paroi (302), le premier élément de renforcement (307) et/ou le second élément de renforcement (308) ont une taille plus petite que celle de l'élément de renfort de partie d'extrémité (305).

11. Batterie (100), comprenant :
un élément (40) ; et
le composant de gestion thermique (30) selon l'une quelconque des revendications précédentes 1 à 10, dans laquelle le composant de gestion thermique (30) est en contact thermoconducteur avec l'élément (40) par le biais de la première paroi (301).

12. Batterie (100) selon la revendication 11, dans laquelle la batterie (100) comprend en outre un composant de collecte de fluide, dans laquelle le composant de collecte de fluide est raccordé au composant de gestion thermique (30), le composant de collecte de fluide comprend un canal d'écoulement de collecte de fluide, et le canal d'écoulement de collecte de fluide communique avec l'espace de logement (303) du composant de gestion thermique (30).

13. Appareil électrique, comprenant la batterie (100) selon la revendication 11 ou 12, dans lequel la batterie (100) est configurée pour effectuer l'alimentation en énergie électrique à l'appareil électrique.
